# EUROPEAN PATENT SPECIFICATION

(11) **EP 2 707 937 B1**
(45) Date of publication and mention of the grant of the patent: **29.07.2015**
(21) Application number: 12722897.1
(22) Date of filing: 09.05.2012
(51) Int. Cl.: H02J 7/02, H02H 3/14

(54) **BATTERY CHARGING DEVICE AND PROCESS FOR OPERATING THE SAME**
BATTERIEAUFLADEVORRICHTUNG UND BETRIEBSVERFAHREN DAFÜR
DISPOSITIF DE CHARGE DE BATTERIE ET SON PROCÉDÉ DE FONCTIONNEMENT

(30) Priority: 10.05.2011 EP 11165457; 10.05.2011 US 201161484648 P
(43) Date of publication of application: 19.03.2014
(73) Proprietor: BRUSA Elektronik AG, 9466 Sennwald (CH)
(72) Inventor: KRAUSE, Axel, CH-9650 Nesslau (CH)
(74) Representative: Patentbüro Paul Rosenich AG
(86) International application number: PCT/IB2012/052303
(87) International publication number: WO 2012/153276

(56) References cited:
- KR-A- 20040 024 082

## Description

The invention relates to a battery charging device, including an alternating voltage input, a direct voltage output, an input for a protective conductor, and a rectifier connected to the alternating voltage input. Furthermore, the invention relates to a process for operating a battery charging device including an alternating voltage input, a direct voltage output, an input for a protective conductor, and a rectifier connected to the alternating voltage input.

Battery charging devices of the kind mentioned are commonly known. They are used to charge a battery or an accumulator with electrical energy in order to render network-independent electrical devices operable. If these charging devices comprise metallic housing parts that a user may come into contact with during normal operation, special precautions have to be taken apart from insulating such metallic housing parts against live components, in case the insulation is defective resulting in the housing possibly carrying dangerous and sometimes life-threatening voltages. This is true, in particular, of electric cars, where, in the case of defects, dangerous voltages might occur both on the battery charging device and on the frame and body of the vehicle.

The KR 10 2004 024 082 A, for example discloses a charging circuit for an electric motor vehicle with a protection circuit for isolating the charging cable. To this end, the voltages between the vehicle mass and the two potentials of a charging cable are measured and evaluated in order to recognise an insulation defect. The charging cable is electrically connected to a transformer, and thus is galvanically isolated from the electricity grid. The problem is that an insulation defect in direction of the housing of the battery charging device is not detected.

The KR 10 2004 024 082 A, does not, however, address the problem how to ensure save charging even from electrical systems which do not have a functioning protective conductor.

Moreover, the EP 0 751 600 A1 discloses a monitoring circuit for detecting the presence of a correctly connected earth conductor. If no such earth conductor is present, an artificial fault current signal is generated via a resistance. This signal causes a fault current circuit breaker arranged in the monitored line to be tripped. This will stop undertaking charging operations from safety-critical networks which are not equipped with a protective conductor. However, it is precisely the presence of a protective conductor that cannot generally be taken for granted, for example in blocks of apartments with outdated electrical systems. This means that there is no way of using such systems to charge an electric vehicle, as a consequence reducing the acceptance of electric cars.

It is therefore the requirement of the invention to propose an improved battery charging device and an improved process for operating the same. In particular, it shall be possible to ensure safe charging also from electrical systems which do not have a functioning protective conductor.

According to the invention, this requirement is met by a battery charging device of the kind mentioned in the beginning, which additionally includes a voltage measuring unit adapted to measure the voltage between the protective conductor and at least one output voltage potential of the rectifier.

Furthermore, this requirement is met by a process of the kind mentioned in the beginning, by which the voltage between the protective conductor and at least one output voltage potential of the rectifier is measured.

Advantageously, an insulation defect may be safely detected in this manner both in situations where a protective conductor is present and connected, and in situations where this is missing or broken.

It should be noted at this point that measuring the voltage between the protective conductor and at least one output voltage potential of the rectifier also includes measuring a voltage derived therefrom. Thus, the two voltages, since they are directly dependent upon one another, are used synonymously in the following description.

Advantageous designs and further developments of the invention are disclosed in the sub-claims as well as in the description in conjunction with the figures.

Advantageously, the battery charging device includes a voltage measuring unit which is adapted to measure the voltage between the protective conductor and at least one output voltage potential of the rectifier. In this manner, an insulation defect may be detected on both output voltage potentials of the rectifier of the battery charging device.

In a further advantageous design of the invention, the battery charging device includes an evaluation circuit connected with the voltage measuring unit or integrated with it, and adapted to evaluate the time progression of the at least one measured voltage and, in case of an anomaly, to output a fault signal. This will increase the certainty of detecting a fault, as it does not rely solely upon singular states of the battery charging device for fault tripping. For example, there may be situations where a voltage between the protective conductor and at least one output voltage potential of the rectifier is momentarily equal to zero but without a fault being present. Using the proposed variant of the invention a false alarm based on such a short-term event may be suppressed.

In this context, it is advantageous if the evaluation circuit is adapted to output the fault signal when at least one voltage of duration longer than a semi-wave of the mains input voltages is smaller than a specifiable value, in particular when such voltage is zero. As shall be explained in more detail with reference to the figures, the absence of a substantial voltage value at one of the two output voltage potentials of the rectifier for longer than a semi-wave of the input voltage, for a corresponding construction of the battery charging device, may indicate an insulation defect. This holds both in the European and in the US electricity networks. This enables the battery charging device to be used universally throughout the world.

In a further favourable variant, the battery charging device includes an optical and/or acoustic output unit connected with the evaluation circuit and adapted to output an optical and/or acoustic signal if the fault signal indicates a defect. In this manner, an insulation defect may be signalled to the user of the battery charging device who thereupon can initiate suitable measures.

In a version, the battery charging device includes a switching device connected with the evaluation circuit and adapted to interrupt a current across the alternating voltage input if the fault signal indicates a fault. In this manner, the voltage supply may be automatically interrupted if an insulation defect is detected.

It is favourable if the battery charging device includes several switching devices of which at least one, respectively, is assigned to a neutral conductor or a phase of the alternating voltage input. This means that at least one switching device is assigned to a neutral conductor and at least one switching device is assigned to a phase. In this manner, all poles of the battery charging device may be isolated from the mains. The expression "several switching devices" refers to individual switches each with its own control (for example several one-pole relays) as well as to individual switches with a common control (for example a multi-pole relay).

It is especially advantageous if the switching device is bridged by a series connection including a capacitor and a current-limiting element, in particular an ohmic resistance. This ensures that in case of an insulation defect, a fault current will flow even for an open switching element, which can trip a fault current circuit breaker. The series connection is preferably laid out in such a manner that no dangerous fault currents can flow.

In a further favourable variant of the invention the battery charging device includes a fuse arranged in series with a switching device. This ensures that the safety of the battery charging device is increased since, provided this is connected to the protective conductor, it is isolated in case of a defect from the mains with the aid of the fuses even if the voltage measuring unit, the evaluation circuit or the switching device is defective or is too slow in reacting.

In a further advantageous variant, the battery charging device includes two voltage dividers that, on the input side, are arranged between the input of the protective conductor and an output voltage potential of the rectifier, and on the output side, are connected to the voltage measuring unit. In this manner, the output voltage potentials of the rectifiers may be set to a defined level with respect to the (open) protective conductor connection. Furthermore, instead of measuring the actual voltage between the protective conductor and at least one output voltage potential of the rectifier, a voltage derived therefrom may be measured. Such is lower and easier to process via the voltage measuring unit.

In a particularly advantageous variant of the invention, the battery charging device includes a control adapted to keep the switching device or switching devices open if the battery charging device is connected to the alternating current mains at least during a tripping period of the fault current circuit-breaker arranged upstream of the battery charging device on the side of the alternating current. In this manner, provided the switching device is bridged by capacitors, a check can be carried out prior to connecting the battery charging device to the mains, as to whether an insulation defect is present. This is because small alternating fault currents may flow already which are recognised by a fault current circuit-breaker in the feed line. In such situation, no dangerous voltage at all will be supplied to the battery charging device, thus making it especially safe.

Although this variant represents an advantageous further development of the invention, the operation of this variant is not dependent upon measuring the voltage between the protective conductor and at least one output voltage potential of the rectifier. Therefore, the variant shown may also form the basis of an independent invention.

Finally, the battery charging device, in a favourable variant, includes a DC/DC converter which on its input side is connected with an intermediate circuit supplied by the rectifier, and, on its output side, is connected to the direct voltage output. In this manner, the direct voltage on the output side may be converted to a voltage level that is advantageous for the battery.

The above-described designs and further developments of the invention may be combined at random. Reference in this specification to "an/one embodiment," "a/one variant" or "a/one version" means that a particular feature, structure, or characteristic described in connection with the variant, version, or embodiment is included in at least one variant, version, or embodiment of the disclosure. The appearances of the phrases "in one variant/version/embodiment" in various places in the specification are not necessarily all referring to the same variant, version, or embodiment, nor are separate or alternative variants, versions, or embodiments mutually exclusive of other variants, versions, or embodiments. Moreover, various features are described which may be exhibited by some variants, versions, or embodiments and not by others. Similarly, various requirements are described which may be requirements for some variants, versions, or embodiments but not others. If the specification states a component or feature "may", "can", "could", or "might" be included or have a characteristic, that particular component or feature is not required to be included or have the characteristic. Furthermore, as used throughout this specification, the terms 'a", "an", "at least" do not denote a limitation of quantity, but rather denote the presence of at least one of the referenced item, and the term "a plurality" denotes the presence of more than one referenced item.

Exemplary versions of the present invention shall now be described in detail with reference to the schematic figures of the drawings, in which:
Fig. 1 schematically depicts a variant of the battery charging device according to the invention;
Fig. 2 depicts a fault current circuit breaker arranged upstream of the battery charging device;
Fig. 3 depicts the time progression of two input voltages across the voltage measuring unit for a correctly functioning battery charging device in a network with phase and neutral conductor;
Fig. 4 depicts the time progression of input voltages across the voltage measuring unit for a correctly functioning battery charging device in a network with two phases;
Fig. 5 depicts the time progression of input voltages across the voltage measuring unit for a short-circuit between the positive output voltage potential of the rectifier and ground;
Fig. 6 depicts the time progression of input voltages across the voltage measuring unit for a short-circuit between the negative output voltage potential of the rectifier and ground;
Fig. 7 schematically depicts a variant of the battery charging device with individual switching devices for the phases/the neutral conductor; and,
Fig. 8 schematically depicts a variant of the battery charging device with a measuring unit also measuring the alternate voltage of the phases/the neutral conductor.

In the figures of drawings identical parts and similar parts are marked by identical reference symbols, and similarly functioning elements and features, as long as nothing different has been stated, are marked by identical reference symbols having different indices.

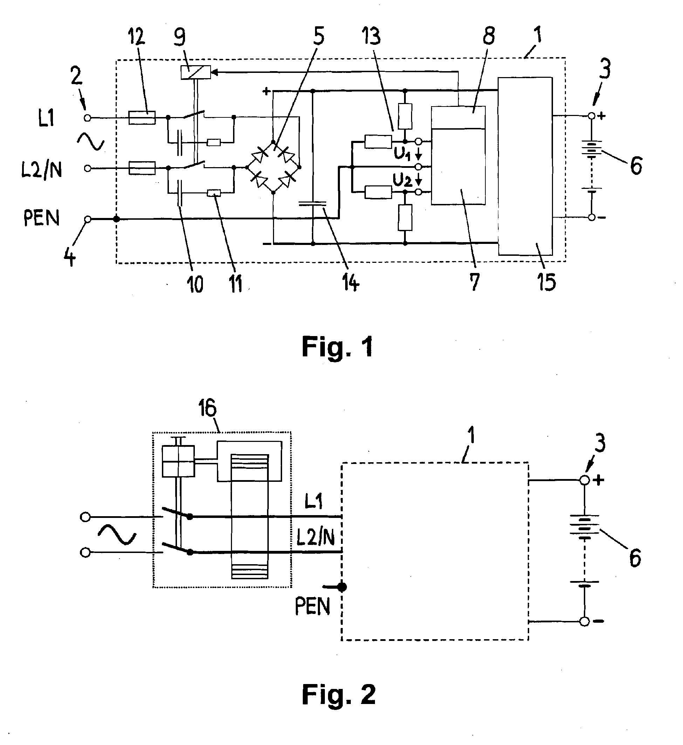

Fig. 1 depicts a battery charging device comprising an alternating voltage input 2 and a direct voltage output 3, an input 4 for a protective conductor PEN as well as a rectifier 5 connected with the alternating voltage input 2. In the example shown, the alternating voltage input 2 is connected with two phases L1 and L2 or a phase L1 and a neutral conductor N, and the direct voltage output 3 is connected with a battery 6. Furthermore, the battery charging device 1 includes a voltage measuring unit 7 which is adapted to measure a voltage U₁, U₂ derived from the voltage between the protective conductor PEN and at least one output voltage potential of the rectifier 5.

In this manner, a short-circuit may be detected between the respective output voltage potential and the ground or the protective conductor PEN. Specifically, the voltage measuring unit 7, with the battery charging device 1 of Fig. 1, is adapted to measure voltages between the protective conductor PEN and both output voltage potentials of rectifier 5. In this manner, a short-circuit may be detected between both output voltage potentials of the rectifier 5 and ground, or the protective conductor PEN.

Furthermore, the battery charging device 1 according to the invention includes a switching device 9 connected to an evaluation circuit 8 and adapted to interrupt a current between the alternating voltage input 2 and the direct voltage output 3 if the fault signal indicates a fault (the voltage measuring unit 7 and the evaluation circuit 8 may, of course, also be implemented as a single component, for example a corresponding integrated circuit).

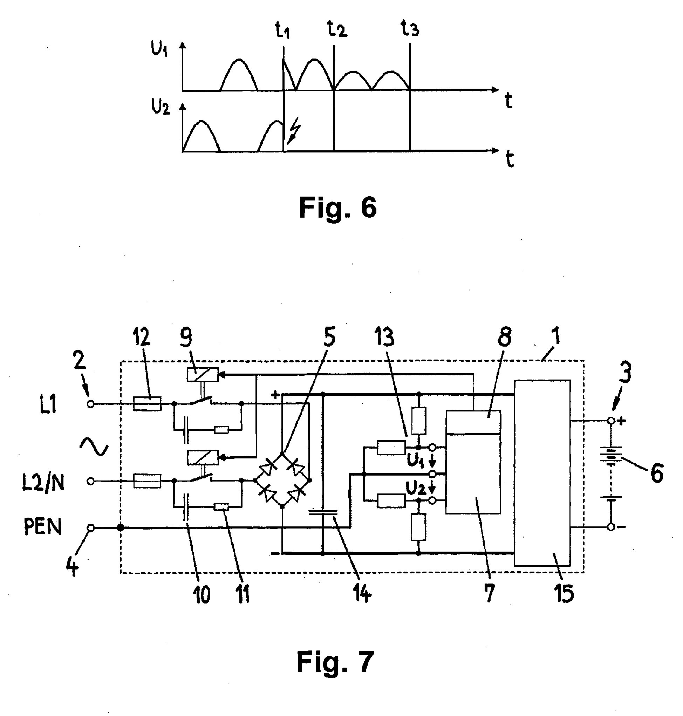

In this example, the switching device 9 includes a relay with two switching contacts of which one, respectively, is assigned to the neutral conductor N or a phase L1, L2 of the alternating voltage input 3. Alternatively, it would be feasible for the battery charging device 1 to comprise several separate switching devices 9 - for example relays - with a switching contact each, of which at least one, respectively, is assigned to the neutral conductor N or a phase L1, L2 of the alternating voltage input 3. This means that at least one switching device 9 is assigned to the neutral conductor N and at least one switching device 9 is assigned to a phase L1, L2 (see also Fig. 7).

Additionally, the switching device 9 is bridged by a series connection comprising a capacitor 10 and a current-limiting element, here a resistance 11. Furthermore, the battery charging device 1 includes a fuse 12 arranged in series with the switching device 9.

Finally, the battery charging device 1 includes two voltage dividers 13 as well as buffer capacitor 14. On the input side, the voltage dividers 13 are connected between the protective conductor PEN and one output voltage potential each of rectifier 5. On the output side, they are connected with the voltage measuring unit 7. The latter, for example, is used to keep the voltage in an intermediate circuit essentially constant. It may also be suitable to absorb the pulse currents of a connected consumer and to keep the associated electromagnetic interference away from the network. This is advantageous in cases as described here, where the battery charging device 1 includes a DC/DC converter, which, on the input side, is connected with an intermediate circuit supplied by the rectifier 5 and, on the output side, is connected with the direct voltage output 3.

At this point it should be noted that although some of the elements encompassed by the battery charging device 1 of Fig. 1 may be advantageous, they are not mandatory for the function according to the invention. These elements are, in particular, the switching device 9, the capacitor 10, the resistance 11, the fuse 12 and the voltage divider 13. It is, of course, also feasible for the components used in the example to be designed in an alternative manner. For example, instead of resistance 11, an active current limiter with a transistor may be provided. It is also feasible for the switching device 9 to comprise electronic switches (provided legal regulations do not make it mandatory to use galvanically isolating switches).

Fig. 2 depicts a conventional fault current circuit breaker 16 in the supply line to the network. It is assumed that this trips only in case of pure fault alternating currents. For example, the fault current circuit breaker 16 may be part of a domestic installation. But it is also feasible that the fault current circuit breaker 16, as is often the case, is integrated with the charging cable as a protection against electric shocks if no earth conductor is present. In order to keep the cost for this fault current circuit breaker 16 low, vehicle manufacturers tend to use very simple types which are guaranteed to react only to pure fault alternating currents (AC), not necessarily to pulsating direct currents (DC) such as they may well occur in modern charging devices.

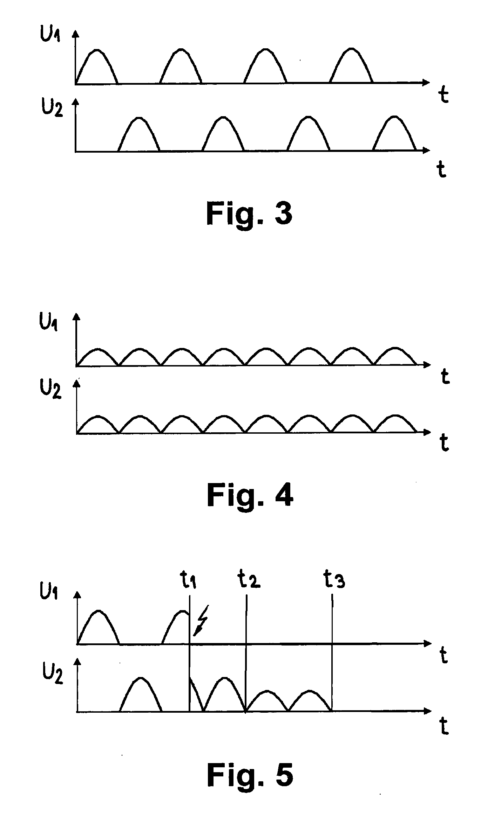

The function of the battery charging device shown in Fig. 1 will now be described in detail with reference to Figs. 3 - 6:

Consideration will now be given to the situation in the European electricity network (or the 120V US-network), where neutral conductors N and protective conductors PEN have essentially the same potential since in the upstream installation they are connected with each other. The correctly functioning battery charging device 1 is connected to the electricity network L1, N, PEN, wherein the switches of switching device 9 are assumed to be closed and the protective conductor PEN is assumed to be connected. This results in a progression for the voltages U₁, U₂ as shown in Fig. 3.

The positive output of rectifier 5, for a positive semi-wave of L1, is connected with this phase, at the same moment neutral conductor N, and thus the earth or protective conductor PEN, is connected with the negative output of rectifier 5. The voltage U₂ is therefore zero at this moment, whilst the voltage U₁ is a positive map of the positive semi-wave of L1.

The negative output of rectifier 5, for a negative semi-wave of L1, is connected with this phase, at the same moment neutral conductor N, and thus the earth or protective conductor PEN, is connected with the positive output of rectifier 5. The voltage U₁ therefore is zero at this moment, whilst the voltage U₂ is a positive map of the negative semi-wave of L1.

The result is that the voltage U₁ or U₂ is larger than zero only for one semi-wave of the mains frequency. Since the housing is earthed the voltages U₁, U₂ remain unaffected, no matter whether the housing is touched by a person or not.

Moreover, the voltages U₁ or U₂ are of the same height compared to the potential of the protective conductor PEN which, of course, as mentioned in the beginning, has the same potential as the neutral conductor in the European network.

Consideration will now be given to the situation in the 240V US-network, where the voltage of each of the two mains wires (phases) L1 and L2 is 120 V compared to the protective conductor PEN, but where the phase of L1 in relation to L2 is turned about 180° resulting in a voltage of 240V between phases L1 and L2.

When the correctly functioning battery charging device 1 is connected to the electricity network L1, L2 PEN, the resulting progression for the voltages U₁ or U₂ is as shown in Fig. 4. The potential of the protective conductor, in this network, lies always between the two phase signals resulting in a symmetrical progression of the voltages U₁ or U₂, but with half the amplitude for the same input voltage.

In the example illustrated, the battery charging device 1 includes a closed metal housing which is connected with the protective conductor PEN. Thus protection against electric shock is always present, since an earth connection of a phase or a neutral conductor to ground results in at least one of the fuses 12 tripping if the switching device 9 is not opened in time, as will be described hereunder for the case of a non-connected protective conductor PEN.

If the protective conductor PEN in the European network is not connected, the potential of the housing or of the open protective conductor connection 4 is drawn by the voltage dividers 13 to half the output voltage of rectifier 5, resulting, as already shown in Fig. 4, in a symmetrical progression for the two voltages U₁ or U₂ both for the European network and for the US-network.

The dividing ratios of the voltage dividers 13 are essentially the same being 100:1 for example, so that the input voltage for the voltage measuring unit 7 is comparatively small. By choosing high resistance values the leakage current is also kept so small that it can neither harm any persons nor trip the fault current circuit breaker 16 upstream of the battery charging device 1.

If the housing is touched by a person the housing will be earthed resulting in the voltage progression shown in Fig. 3 (European network) or Fig. 4 (US-network). The function of a correctly functioning charging device 1 is not affected thereby and the leakage current flowing through the person that touches the housing is so small that it is not detected and cannot lead to a dangerous situation.

Now, if the short-circuit is an earth contact between the positive output voltage potential of rectifier 5 and earth or the metallic housing of battery charging device 1 and if the protective conductor PEN is not connected to the housing or is broken, the resulting progression of voltage U₁ deviates from that shown in Fig. 3 and Fig. 4. Fig. 5 depicts a case where such a short-circuit occurs during a positive semi-wave (symbolised by a thunderbolt symbol at time t₁).

The anomaly occurring can be clearly recognized in Fig. 5. Specifically voltage U₁ permanently remains at zero or slightly above zero, whereas voltage U₂ no longer exhibits any pauses between individual semi-waves. These anomalies in the time progression of voltage U₁ and/or U₂ may thus be utilised for detecting a contact with earth.

Specifically the battery charging device 1 in this example is adapted to output the fault signal when at least one voltage of voltages U₁ or U₂ longer than the duration of a mains voltage semi-wave is zero or smaller than a specifiable value (in order to be able to also detect an earth contact with a higher resistance between the output voltage potential of rectifier 5 and earth). Advantageously, the absence of a substantial value for a voltage U₁ or U₂ for longer than a semi-wave both in the European network and in the US-network is a sure indication that an earth contact has occurred.

For example, the battery charging device 1 according to the invention could comprise an optical and/or acoustic output unit or be connected with the same so that with the aid thereof an optical and/or acoustic signal is output if an insulation defect is detected. Alternatively or additionally, a current may be interrupted with the aid of the switching device 9 via the alternating voltage input 2 if the fault signal indicates a defect.

Specifically, the switching device 9 in Fig. 5 is opened at time t₂, so that the battery charging device 1 is now supplied via the RC elements formed by the capacitors 10 and the resistances 11. Voltage U₂ thus drops because of the additional voltage drop on the RC elements.

In the example shown in Fig. 5, the switching device 9 is operated during zero crossing. Thus, the time span during which voltage U₁ is equal to zero lasts longer than a semi-wave and at most two semi-waves. But it would also be feasible not to wait for a zero crossing and to immediately switch the switching device 9 off when voltage U₁ is of duration longer than a semi-wave or smaller than a specifiable value.

Because of capacitors 10, the only fault current flowing is a fault alternating current which, different from a fault direct current, is recognised by the fault current circuit breaker 16 in the supply line. Thereafter the fault current circuit breaker 16 also switches off at time t₂ thereby achieving an even higher degree of safety.

Fig. 6 depicts an analogue case to the case illustrated in Fig. 5, however, the short-circuit is an earth contact occurring between the negative output voltage potential of rectifier 5 and earth or the metallic housing of the battery charging device 1 (time t₁). Thus voltage U₂ is now longer than a zero semi-wave or smaller than a specifiable value leading again to a switch-off of switching device 9 (time t₂) or a tripping of the fault current circuit breaker 16 (time t₃).

For the sake of completeness Fig. 7 schematically depicts a variant of the battery charging device with individual switching devices for the phases/the neutral conductor. The function of the arrangement of Fig. 7 is quite similar to the function of the arrangement of Fig. 1.

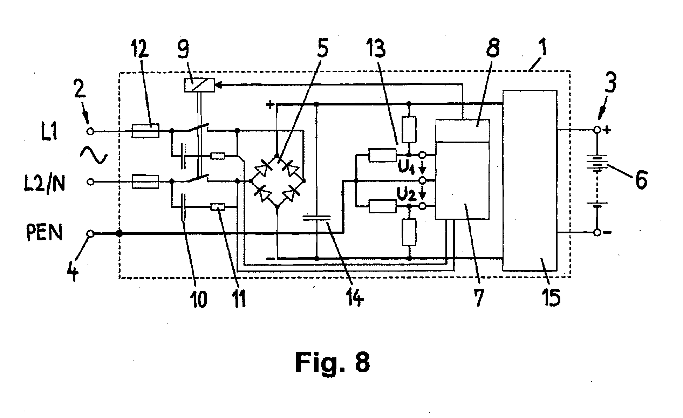

In a further variant of the invention, the battery charging device 1 includes a control which is adapted to keep the switching device 9 open when the battery charging device 1 is connected to an alternating current network L1, L2/N, at least during a trip time of a fault current circuit breaker 16 arranged upstream of the battery charging device 1 on the alternating-current side. In this context, Fig. 8 schematically depicts a variant of the battery charging device with a measuring unit 7 also measuring the alternate voltage of the phases L1, L2 / the neutral conductor N. If the evaluation circuit 8 detects an alternate input voltage, it concludes the battery charging device 1 has just been connected to an alternating current network L1, L2/N and keeps the switching device 9 open in the mentioned way.

Consequently, the battery charging device 1 is initially coupled only via the capacitors 10 to the alternating current network L1, L2/N which is why, if a short-circuit occurs between an output voltage potential of rectifier 5 and earth or the metallic housing of the battery charging device 1, only fault alternating currents can flow (see also the time period between t₂ and t₃ in figures 5 and 6). The fault current circuit breaker 16 in the supply line recognises this and therefore switches the voltage supply off. Since the switching device 9 is kept open for longer than the trip time of the fault current circuit breaker 16, there is in this case no voltage supply at all to the battery charging device 1 thus making it especially safe.

Although this variant is an advantageous further development of the invention, the operation of this variant is not dependent upon measuring the voltage between the protective conductor PEN and at least one output voltage potential of rectifier 5. The variant shown may therefore also form the basis of an independent invention.

Furthermore, said control is not necessarily included in the measuring unit 7 and the evaluation circuit 8. By contrast, said control may also embodied as an individual device.

### List of reference labels

- 1: battery charging device
- 2: alternating voltage input
- 3: direct voltage output
- 4: protective conductor
- 5: rectifier
- 6: battery
- 7: voltage measuring unit
- 8: evaluation circuit
- 9: switching device
- 10: capacitor
- 11: current-limiting element (resistance)
- 12: fuse
- 13: voltage divider
- 14: buffer capacitor
- 15: DC/DC converter
- 16: fault current circuit breaker
- U: voltage
- U₁: first input voltage of the voltage measuring unit 7
- U₂: second input voltage of the voltage measuring unit 7
- t: time
- t₁: point in time at which a short-circuit between an output voltage potential of the rectifier and the protective conductor PEN occurs
- t₂: point in time, at which the switching device 9 is opened
- t₃: point in time at which the fault current circuit breaker 16 is opened.

## Claims

1. A battery charging device (1), comprising:
- an alternating voltage input (2),
- a direct voltage output (3),
- an input (4) for a protective conductor (PEN) and a rectifier (5) connected with the alternating voltage input (2),
**characterised by**
a voltage measuring unit (7), which is adapted for measuring the voltage between the protective conductor (PEN) and at least one output voltage potential of rectifier (5).

2. Battery charging device (1) according to claim 1, **characterised by** a voltage measuring unit (7), which is adapted to measure the voltages (U₁, U₂) between the protective conductor (PEN) and both output voltage potentials of rectifier (5).

3. Battery charging device (1) according to claim 1 or 2, **characterised by** an evaluation circuit (8), which is connected with the voltage measuring unit (7) and adapted to evaluate the time progression of at least one measured voltage (U₁, U₂) and to output a fault signal in case of an anomaly, preferably when at least one voltage (U₁, U₂) longer than a semi-wave of the mains input voltages is smaller than a specifiable value.

4. Battery charging device (1) according to claim 3, **characterised by** an optical and/or acoustic output unit, which is connected with the evaluation circuit (8) and adapted to output an optical and/or acoustic signal, when the fault signal indicates a defect.

5. Battery charging device (1) according to one of claims 3 to 4, **characterised by** a switching device (9), which is connected with the evaluation circuit (8) and adapted to interrupt a current via the alternating voltage input (3), if the fault signal indicates a defect.

6. Battery charging device (1) according to claim 5, **characterised by** several switching devices (9), of which at least one, respectively, is assigned to a neutral conductor (N) or a phase (L1, L2) of the alternating voltage input (3).

7. Battery charging device (1) according to claim 5 or 6, **characterised in that** a switching device (9) is bridged by a series connection, which comprises a capacitor (10) and a current-limiting element (11), a fuse (12) being preferably arranged in series with the switching device (9).

8. Battery charging device (1) according to one of claims 2 to 7, **characterised by** two voltage dividers (13), which, on the input side, are arranged between the input (4) for the protective conductor (PEN) and one output voltage potential each of the rectifier (5), and, on the output side, are connected with the voltage measuring unit (7).

9. Battery charging device (1) according to one of claims 5 to 8, **characterised by** a control which is adapted keep the switching device (9) or switching devices open when the battery charging device (1) is connected to an alternating current network (L1, L2/N) at least during a trip time of a fault current circuit breaker (16) arranged upstream of the battery charging device (1) on the alternating voltage side.

10. Battery charging device (1) according to one of the preceding claims, **characterised by** a DC/DC converter (15), which, on the input side, is connected with an intermediate circuit supplied by the rectifier (5) and on the output side, is connected with the direct voltage output (3).

11. Process for operating a battery charging device (1), which comprises an alternating voltage input (2) and a direct voltage output (3), an input for a protective conductor (PEN), as well as a rectifier (5) connected with the alternating voltage input (2),
**characterised in that** the voltage (U₁, U₂) is measured between the protective conductor (PEN) and at least one output voltage potential of the rectifier (5), preferably between the protective conductor and both outputs of the rectifier.

12. A process as claimed in claim 11, further comprising the steps of:
evaluating the time progression of at least one measured voltage; and,
outputting a fault signal in response to an anomalous time progression; and preferably further comprising the step of:
operating a switch to interrupt the supplying of alternating current input, based on said step of outputting a fault signal.

13. A process as claimed in claim 12, further comprising the step of:
bridging the switch by a connection having series capacitor and current-limiter; and preferably further comprising the steps of:
specifying a minimum value of the at least one measured voltage; and,
outputting the fault signal when the at least one measured voltage is smaller than the specified minimum value for a duration longer than a semi-wave of mains input voltages and/or
outputting a sensory signal when the fault signal indicates an anomaly.

## Patentansprüche

1. Batterieladevorrichtung (1), umfassend:
- einen Wechselspannungseingang (2),
- einen Gleichspannungsausgang (3),
- einen Eingang (4) für einen Schutzleiter (PEN) und einen Gleichrichter (5), der mit dem Wechselspannungseingang (2) verbunden ist,
**gekennzeichnet durch**
eine Spannungsmesseinheit (7), die zum Messen der Spannung zwischen dem Schutzleiter (PEN) und zumindest einem Ausgangsspannungspotential des Gleichrichters (5) ausgebildet ist.

2. Batterieladevorrichtung (1) nach Anspruch 1, **gekennzeichnet durch** eine Spannungsmesseinheit (7), die zum Messen der Spannungen (U₁, U₂) zwischen dem Schutzleiter (PEN) und beiden Ausgangsspannungspotentialen des Gleichrichters (5) ausgebildet ist.

3. Batterieladevorrichtung (1) nach Anspruch 1 oder 2, **gekennzeichnet durch** eine Auswertungsschaltung (8), die mit der Spannungsmesseinheit (7) verbunden ist und zum Auswerten des zeitlichen Verlaufs zumindest einer gemessenen Spannung (U₁, U₂) und zum Ausgeben eines Fehlersignals im Fall einer Anomalie ausgebildet ist, vorzugsweise wenn zumindest eine Spannung (U₁, U₂) länger als eine Halbwelle der Hauptnetzeingangsspannungen kleiner als ein spezifizierbarer Wert ist.

4. Batterieladevorrichtung (1) nach Anspruch 3, **gekennzeichnet durch** eine optische und/oder akustische Ausgabeeinheit, die mit der Auswertungsschaltung (8) verbunden ist und zum Ausgeben eines optischen und/oder akustischen Signals ausgebildet ist, wenn das Fehlersignal einen Defekt anzeigt.

5. Batterieladevorrichtung (1) nach einem der Ansprüche 3 bis 4, **gekennzeichnet durch** eine Schaltvorrichtung (9), die mit der Auswertungsschaltung (8) verbunden ist und zum Unterbrechen eines Stroms **durch** den Wechselspannungseingang (3) ausgebildet ist, wenn das Fehlersignal einen Defekt anzeigt.

6. Batterieladevorrichtung (1) nach Anspruch 5, **gekennzeichnet durch** mehrere Schaltvorrichtungen (9), von welchen zumindest eine einem neutralen Leiter (N) bzw. einer Phase (L1, L2) des Wechselspannungseingangs (3) zugeordnet ist.

7. Batterieladevorrichtung (1) nach Anspruch 5 oder 6, **dadurch gekennzeichnet, dass** eine Schaltvorrichtung (9) durch eine Reihenverbindung überbrückt ist, die einen Kondensator (10) und ein Strombegrenzungselement (11) umfasst, wobei eine Sicherung (12) vorzugsweise in Reihe mit der Schaltvorrichtung (9) angeordnet ist.

8. Batterieladevorrichtung (1) nach einem der Ansprüche 2 bis 7, **gekennzeichnet durch** zwei Spannungsteiler (13), die an der Eingangsseite zwischen dem Eingang (4) für den Schutzleiter (PEN) und einem Ausgangsspannungspotential des Gleichrichters (5) angeordnet sind und an der Ausgangsseite mit der Spannungsmesseinheit (7) verbunden sind.

9. Batterieladevorrichtung (1) nach einem der Ansprüche 5 bis 8, **gekennzeichnet durch** eine Steuerung, die dazu ausgebildet ist, die Schaltvorrichtung (9) oder Schaltvorrichtungen, wenn die Batterieladevorrichtung (1) an ein Wechselstromnetz (L1, L2/N) angeschlossen ist, zumindest während einer Laufzeit eines Fehlerstrom-Leitungsschutzschalters (16) offen zu halten, der stromaufwärts der Batterieladevorrichtung (1) an der Wechselspannungsseite angeordnet ist.

10. Batterieladevorrichtung (1) nach einem der vorangehenden Ansprüche, **gekennzeichnet durch** einen DC/DC-Wandler (15), der an der Eingangsseite mit einer Zwischenschaltung verbunden ist, die vom Gleichrichter (5) versorgt ist, und an der Ausgangsseite mit dem Gleichspannungsausgang (3) verbunden ist.

11. Verfahren zum Betreiben einer Batterieladevorrichtung (1), die einen Wechselspannungseingang (2) und eine Gleichspannungseingang (3), einen Eingang für einen Schutzleiter (PEN) wie auch einen Gleichrichter (5), der mit dem Wechselspannungseingang (2) verbunden ist, umfasst,
**dadurch gekennzeichnet, dass** die Spannung (U₁, U₂) zwischen dem Schutzleiter (PEN) und zumindest einem Ausgangsspannungspotential des Gleichrichters (5) gemessen wird, vorzugsweise zwischen dem Schutzleiter und beiden Ausgängen des Gleichrichters.

12. Verfahren nach Anspruch 11, des Weiteren umfassend die Schritte:
Auswerten des zeitlichen Verlaufs zumindest einer gemessenen Spannung; und
Ausgeben eines Fehlersignals als Antwort auf einen anomalen zeitlichen Verlauf; und vorzugsweise des Weiteren umfassend den Schritt:
Betreiben eines Schalters zur Unterbrechung der Zuleitung eines Wechselstromeingangs, basierend auf dem Schritt zum Ausgeben eines Fehlersignals.

13. Verfahren nach Anspruch 12, des Weiteren umfassend den Schritt:
Überbrücken des Schalters durch eine Verbindung mit einem Kondensator und Strombegrenzer in Reihe; und vorzugsweise des Weiteren umfassend die Schritte:
Spezifizieren eines Minimalwertes der zumindest einen gemessenen Spannung; und
Ausgeben des Fehlersignals, wenn die zumindest eine gemessene Spannung für eine Dauer, die länger als eine Halbwelle von Hauptnetzeingangsspannungen ist, kleiner als der spezifizierte Minimalwert ist und/oder
Ausgeben eines sensorischen Signals, wenn das Fehlersignal eine Anomalie anzeigt.

## Revendications

1. Dispositif de charge de batterie (1), comprenant :
- une entrée de tension alternative (2),
- une sortie de tension continue (3),
- une entrée (4) pour un conducteur de protection (PEN) et un redresseur (5) connecté à l'entrée de tension alternative (2),
**caractérisé par**
une unité de mesure de tension (7) adaptée pour mesurer la tension entre le conducteur de protection (PEN) et au moins un potentiel de tension de sortie du redresseur (5).

2. Dispositif de charge de batterie (1) selon la revendication 1, **caractérisé par** une unité de mesure de tension (7) adaptée pour mesurer les tensions (U₁, U₂) entre le conducteur de protection (PEN) et les deux potentiels de tension de sortie du redresseur (5).

3. Dispositif de charge de batterie (1) selon la revendication 1 ou 2, **caractérisé par** un circuit d'évaluation (8) connecté à l'unité de mesure de tension (7) et adapté pour évaluer la progression dans le temps d'au moins une tension (U₁, U₂) mesurée et pour faire sortir un signal d'erreur en cas d'une anomalie, de préférence lorsqu'au moins une tension (U₁, U₂) est inférieure à une valeur pouvant être spécifiée plus longue qu'une demi-onde des tensions d'entrée du réseau.

4. Dispositif de charge de batterie (1) selon la revendication 3, **caractérisé par** une unité de sortie optique et/ou acoustique qui est connectée au circuit d'évaluation (8) et est adaptée pour faire sortir un signal optique et/ou acoustique lorsque le signal d'erreur indique un défaut.

5. Dispositif de charge de batterie (1) selon l'une des revendications 3 à 4, **caractérisé par** un dispositif de commutation (9) connecté au circuit d'évaluation (8) et adapté pour interrompre un courant via l'entrée de tension alternative (3) si le signal d'erreur indique un défaut.

6. Dispositif de charge de batterie (1) selon la revendication 5, **caractérisé par** plusieurs dispositifs de commutation (9), l'un au moins d'entre eux étant respectivement affecté à un conducteur neutre (N) ou à une phase (L1, L2) de l'entrée de tension alternative (3).

7. Dispositif de charge de batterie (1) selon la revendication 5 ou 6, **caractérisé en ce qu'**un dispositif de commutation (9) est ponté grâce à une connexion en série qui comprend un condensateur (10) et un élément limiteur de courant (11), un fusible (12) étant de préférence disposé en série avec le dispositif de commutation (9).

8. Dispositif de charge de batterie (1) selon l'une des revendications 2 à 7, **caractérisé par** deux diviseurs de tension (13) lesquels, du côté d'entrée, sont disposés entre l'entrée (4) pour le conducteur de protection (PEN) et un potentiel de tension de sortie de chacun des redresseurs (5) et sont connectés, du côté de sortie, à l'unité de mesure de tension (7).

9. Dispositif de charge de batterie (1) selon l'une des revendications 5 à 8, **caractérisé par** une commande qui est adaptée pour maintenir ouvert (s) le dispositif de commutation (9) ou des dispositifs de commutation lorsque le dispositif de charge de batterie (1) est connecté à un réseau de courant alternatif (L1, L2/N) au moins pendant un temps de trajet d'un disjoncteur de protection contre un courant de défaut (16) disposé en aval du dispositif de charge de batterie (1) du côté de la tension alternative.

10. Dispositif de charge de batterie (1) selon l'une des revendications précédentes, **caractérisé par** un convertisseur CC/CC (15) lequel, du côté d'entrée, est connecté à un circuit intermédiaire alimenté par le redresseur (5) et est connecté, du côté de sortie, à la sortie de tension continue (3).

11. Procédé pour faire fonctionner un dispositif de charge de batterie (1), lequel comprend une entrée de tension alternative (2) et une sortie de tension continue (3), une entrée pour un conducteur de protection (PEN) ainsi qu'un redresseur (5) connecté à l'entrée de tension alternative (2),
**caractérisé en ce que** la tension (U₁, U₂) est mesurée entre le conducteur de protection (PEN) et au moins un potentiel de tension de sortie du redresseur (5), de préférence entre le conducteur de protection et les deux sorties du redresseur.

12. Procédé tel que revendiqué dans la revendication 11, comprenant en outre les étapes suivantes :
l'évaluation de la progression dans le temps d'au moins une tension mesurée ; et
la sortie d'un signal d'erreur en réponse à une progression dans le temps anormale ; et comprenant en outre de préférence l'étape suivante :
l'actionnement d'un commutateur pour interrompre l'alimentation d'entrée de courant alternatif sur la base de ladite étape de sortie d'un signal de défaut.

13. Procédé tel que revendiqué par la revendication 12, comprenant en outre l'étape suivante :
le pontage du commutateur grâce à une connexion ayant un condensateur et un limiteur de courant en série ; et comprenant en outre de préférence les étapes suivantes :
la spécification d'une valeur minimale de cette au moins une tension mesurée ; et
la sortie du signal d'erreur lorsque cette au moins une tension mesurée est inférieure à la valeur minimale spécifiée pour une durée plus longue qu'une demi-onde de tensions d'entrée du réseau et/ou
la sortie d'un signal sensoriel lorsque le signal d'erreur indique une anomalie.
